# EUROPÄISCHE PATENTANMELDUNG

(11) **EP 2 008 953 A1**
(43) Veröffentlichungstag der Anmeldung: **31.12.2008**
(21) Anmeldenummer: 07111426.8
(22) Anmeldetag: 29.06.2007
(51) Int. Cl.: B65G 47/52

(54) **Anordnung und Verfahren zum Fördern von Gegenständen**

(71) Anmelder: Dividella AG, 9472 Grabs (CH)
(72) Erfinder: Traber, Roman, 9451 Kriessern (CH)
(74) Vertreter: Wenger, René

(57) **Zusammenfassung**

Ein Pufferspeicher zum Förden und Zwischenspeichern von Gegenständen (9) verfügt über einen Pufferförderer (2) mit einem über Umlenkorgane (12,13) endlos geführten Zugfördermittel (3), an dem Aufnahmen (6,6',6'') zum zeitweiligen Aufnehmen der Gegenstände (9) angeordnet sind. Zum berührungslosen Überführen von einem Beladebereich (4) für den Pufferförderer (2) in die Aufnahmen (6') einerseits und von den Aufnahmen (6'') in einen Entladebereich (5) der Gegenstände (9) andererseits sind pneumatische Fördermittel in Form von Saugorganen (7,8) vorgesehen.

## Beschreibung

Die Erfindung betrifft eine Anordnung, insbesondere einen Pufferspeicher und ein Verfahren zum Fördern und gegebenenfalls zum Zwischenspeichern von Gegenständen gemäss dem Oberbegriff von Anspruch 1. Zum Beispiel in Verpackungslinien zum Abpacken von Gegenständen in Schachteln können unregelmässig ankommende Gegenstände zu Problemen bei der Weiterverarbeitung führen. Mittels eines Zwischenspeichers ist es möglich, einen gewünschten Takt von ankommenden Gegenständen zu einer Verpackungsmaschine auf einfache Art und Weise einzustellen. Hierzu werden Pufferförderer verwendet, die endlos geführte Zugfördermittel aufweisen, an denen Aufnahmen zum zeitweiligen Aufnehmen der Gegenstände angeordnet sind. Mit diesem Pufferspeicher ist es möglich, auch schwierig zu handhabendes Stückgut zu fördern und zwischenzuspeichern. Solche Stückgüter können beispielsweise Portionsverpackungen aus Folienmaterial (Papier, Papierlaminat, Kunststoff, etc.) zum Verpacken von Genussmitteln, Lebensmittel oder pharmazeutischen Substanzen sein, die als Sachets oder Pouches bekannt sind. Insbesondere eignet sich der Pufferförderer und das entsprechende Verfahren für Päckchen in Form von länglichen Schlauchbeuteln aus durchlässigem Folienmaterial (z.B. Filterpapier), die befüllt sind. Selbstverständlich ist der erfindungsgemässe Pufferspeicher nicht auf das Anwendungsgebiet der Verpackungstechnologie beschränkt.

In der DE 44 13 762 A1 ist eine Förderanordnung beschrieben worden, der mehrere nebeneinander angeordnete Förderer aufweist. Die Förderer enthalten jeweils obere und untere Räder, um die endlose Ketten geschlungen sind. Die Ketten sind motorisch über die Räder antreibbar. An den Ketten sind Aufnahmen in Form von Tablaren angeordnet, die paternosterartig mitsamt den aufgenommenen Gegenständen in Förderrichtung bewegbar sind. Die Überführung der Gegenstände in die und aus den Aufnahmen erfolgt mittels Zylinder-Kolben-Systemen. Ein derartiges mechanisches Überführen der Gegenstände hat jedoch verschiedene Nachteile. Ein Überführungsvorgang kann verhältnismässig viel Zeit beanspruchen, weshalb die endlos geführte Kette des Förderers entsprechend mit einer geringen Geschwindigkeit gefahren werden kann. Die Überführung der Gegenstände erfordert weiterhin einen hohen steuerungstechnischen Aufwand. Sodann hat sich in der Praxis gezeigt, dass solche Förderer für kleine Gegenstände oder aufgrund ihrer Form und Beschaffenheit schwierig zu handhabende Gegenstände wenig geeignet sind.

Aus der EP 254 888 B1 ist ein Förderer bekannt geworden, bei dem Gegenstände durch Eingriffsteile bewegt werden, die über Ansaugtöpfe verfügen. Für einen Überführungsvorgang beim Beladen oder Entladen des Förderers müssen folgende Verfahrensschritte ausgeführt werden: Bewegen des Förderers und der Eingriffsteile zum Gegenstand, Richten der Ansaugtöpfe zum Kontaktieren des Gegenstands, Erzeugen eines Vakuums in den Ansaugtöpfen und anschliessend Ziehen der Last in oder aus dem Förderer. Dieser Förderer eignet sich lediglich zum Bewegen kastenförmiger Lasten. Ein weiterer Nachteil dieses Förderers ist, dass er eine verhältnismässig geringe Förderleistung aufweist.

In der CH 692 453 A5 sind ein Speicher und ein Verfahren zum Beladen des Speichers beschrieben, bei welchem Gegenstände direkt von einem Transportband in durch Tablare vorgegebene Aufnahmen beladen werden. Dieser Überführungsvorgang ist ebenfalls verhältnismässig langsam.

Es ist daher eine Aufgabe der Erfindung, die Nachteile des Bekannten zu vermeiden und insbesondere eine Anordnung, besonders bevorzugt einen Pufferspeicher und ein Verfahren der eingangs genannten Art zu schaffen, der bzw. das sich durch eine verbesserte Förderleistung und Aufnahmekapazität auszeichnet. Insbesondere soll die Dauer eines Überführungsvorgangs der Gegenstände in oder aus den Aufnahmen des Förderers verkürzt werden. Weiterhin soll die Anordnung auch zum Fördern und Zwischenspeichern von schwierig zu handhabenden Gegenständen geeignet sein. Diese Aufgaben werden erfindungsgemäss mit einer Anordnung und einem Verfahren gelöst, die die Merkmale in Anspruch 1 bzw. Anspruch 19 aufweisen.

In vorrichtungsmässiger Hinsicht zeichnet sich die Anordnung dadurch aus, dass sie pneumatische Fördermittel zum berührungslosen Überführen der Gegenstände in die oder aus den Aufnahmen des Förderers enthält. Die Förderer der Anordnung können beispielsweise auf einem so genannten Paternosterprinzip beruhen. Die Anordnung kann bevorzugt ein Pufferspeicher mit einem oder allenfalls mehreren Pufferförderern sein. Die nachfolgend beschriebenen Übergabeeinrichtungen könnten aber auch für andere Zwecke einsetzbare Förderer, d.h. also nicht nur für Pufferförderer, sondern für konventionelle Förderer, vorteilhaft sein.

Vorteilhaft ist es, wenn beide Übergabeeinrichtungen pneumatische Fördermittel enthalten, wodurch sowohl beladeseitig als auch entladeseitig die Gegenstände berührungslos in bzw. aus den Aufnahmen überführt werden können. Pneumatische Fördermittel können Saugluft- oder Druckluftförderanlagen sein, die den Gegenstand ansaugen oder wegblasen. Die pneumatische Förderung hat den Vorteil, dass einerseits die Gegenstände auf einfache Art und Weise und ohne unnötige Beschädigung transportiert werden können.

Am über Umlenkorgane endlos geführten Zugfördermittel kann eine Mehrzahl von Aufnahmen für die Gegenstände angeordnet sein. Die Aufnahmen können nach dem Paternosterprinzip um die Umlenkorgane umlaufen. Die Aufnahmen können dabei vorzugsweise in regelmässigen Abständen beispielsweise an einer oder mehreren Förderketten, einem Förderband oder einem anderen Zugfördermittel des Pufferförderers angeordnet sein. Die Umlenkorgane können je nach Zugfördermittel Räder oder Walzen sein, wobei wenigstens eines der Umlenkorgane motorisch antreibbar ist. Besonders bevorzugt kann es sein, wenn der Pufferförderer vertikal verläuft. In diesem Fall würde er entsprechend angeordnete obere und untere Umlenkorgane aufweisen.

In einer ersten Ausführungsform können die Aufnahmen zum Aufrechterhalten einer Luftströmung für die pneumatische Förderung der Gegenstände als kanalartige Aufnahmefächer ausgebildet sein. An sich wäre es sogar aber auch denkbar, die Aufnahmen wie beispielsweise in der CH 692 453 A5 als Tablare auszugestalten. Bei eine solchen Ausführungsform würden sich die pneumatischen Fördermittel jedoch über einen hohen Energiebedarf auszeichnen. Kanalartige Aufnahmefächer haben demgegenüber den Vorteil, dass Druckverluste bei der pneumatischen Förderung der Gegenstände erheblich gesenkt werden können und so ein effizienter Betrieb der pneumatischen Fördermittel möglich ist. Die Aufnahmefächer können auf der Aussenseite zum Durchführen der Gegenstände offen ausgebildet sein. Im Querschnitt (Schnittebene verläuft senkrecht zur Belade- und/oder Entladerichtung) kann ein Aufnahmefach jeweils eine umlaufende, geschlossene Kanalinnenwand aufweisen.

Die Aufnahmen können jeweils auf ihrer Innenseite Anschlagelemente zum Stoppen und Vorgeben einer Aufnahmeposition der Gegenstände aufweisen. Als Innenseite wird diejenige Seite der Aufnahmen bezeichnet, die den Umlenkorganen zugewandt ist. Die der Innenseite gegenüberliegende Aussenseite der Aufnahmen ist in der Regel hingegen dem Belade- und dem Entladebereich zugewandt. Die kanalartigen Aufnahmefächer können auf ihrer Innenseite zum Aufrechterhalten einer Luftströmung für die pneumatische Förderung der Gegenstände offen oder wenigstens teilweise offen ausgebildet sein. Anschlagelemente können durch separate Bauteile oder durch eine spezielle Gestaltung des Kanals gebildet sein.

In einer vorteilhaften Ausführungsform können die Anschlagelemente jeweils durch Bolzen gebildet sein. Derartige Bauteile sind kostengünstig und einfach herstellbar. Bei kanalartigen Aufnahmefächern können die Bolzen im Bereich der Innenseite der Aufnahmen auf der Kanalinnenwand befestigt sein und nach innen in den Kanal ragen. Beispielsweise bei zylindrisch ausgebildeten Kanälen wären somit die Bolzen radial nach innen gerichtet.

Wenn die Aufnahmen als kanalartige Aufnahmefächer ausgebildet sind, können sie wenigstens in einem Längsschnitt im Bereich eines Aufnahmeabschnitts an die aufzunehmenden Gegenstände angepasst sein. Mit dieser Anordnung lässt sich der pneumatische Transport der Gegenstände für den Überführungsvorgang weiter optimieren.

Der Bolzen kann ein nach innen ragendes freies Ende aufweisen oder zwei einander gegenüberliegende Kanalinnenwände der Aufnahmefächer miteinander verbinden.

Besonders vorteilhaft kann es sein, wenn die Aufnahmen auf ihrer Aussenseite jeweils einen sich nach innen verjüngenden (bzw. nach aussen sich aufweitenden) Einführabschnitt aufweisen, an denen der Aufnahmeabschnitt anschliesst. Dieser Einführabschnitt kann beispielsweise konisch ausgebildet sein. Der Einführabschnitt hat den Vorteil, dass die Gegenstände einfach aufgenommen werden können und beispielsweise ein unbeabsichtigtes Verklemmen der Gegenstände an der Aussenseite der Aufnahmefächer praktisch ausgeschlossen ist.

Die pneumatischen Fördermittel können ein mit einer Vakuumquelle verbundenes oder verbindbares Saugorgan zum Ansaugen der Gegenstände in die und/oder aus den Aufnahmen aufweisen. Selbstverständlich ist es aber auch denkbar, statt einer derartigen Saugluft-Förderanlage eine Druckluft-Förderanlage vorzusehen. In diesem Fall würden die pneumatischen Fördermittel eine mit einer Druckluftquelle, beispielsweise einem Gebläse oder einem Pressluftnetz, verbundene oder verbindbare Blasanordnung mit einer oder mehreren Druckluftdüsen zum Wegblasen der Gegenstände in die und/oder aus den Aufnahmen aufweisen.

In einer bevorzugten Ausführungsform kann das Saugorgan (oder alternativ eine allfällige Blasanordnung) ortsfest im oder am Pufferspeicher angeordnet sein. Bewegliche Teile zum Überführen der Gegenstände in oder aus dem Pufferförderer sind somit nicht nötig.

Ein Saugorgan kann beladeseitig innen neben den zu beladenden Aufnahmen und/oder entladeseitig aussen neben den zu entladenden Aufnahmen angeordnet sein.

Das Saugorgan kann wenigstens eine Saugkammer aufweisen, die beladeseitig und/oder entladeseitig jeweils auf die zu beladenden bzw. zu entladenden Aufnahmen in einer Belade- bzw. Entladeposition ausgerichtet ist.

Die Aufnahmen können zum gruppenweisen Beladen und/oder Entladen bezogen auf die Förderrichtung mehrere nebeneinander liegende Aufnahmefächer zur Aufnahme jeweils eines Gegenstands aufweisen. Auf diese Weise lässt sich die Förder- und Pufferkapazität des Pufferspeichers weiter erhöhen. Das gruppenweise Beladen und/oder Entladen kann jeweils mittels eines einzigen Saugorgans erfolgen, mit dem eine Gruppe von Gegenständen gleichzeitig angesaugt werden kann. Selbstverständlich ist aber auch vorstellbar, korrespondierend zu den Aufnahmefächern nebeneinander liegende, separate Saugorgane einzusetzen.

Vorteilhaft kann es weiterhin sein, wenn zum gruppenweisen Beladen und/oder Entladen mehrere nebeneinander angeordnete Saugkammern vorgesehen sind. Alternativ oder zusätzlich wäre es auch denkbar, wenn das Saugorgan oder mehrere Saugorgane derart ausgestaltet sind, dass sie übereinander angeordnete Aufnahmefächer bzw. wenigstens bezogen auf die Förderrichtung zwei Reihen von Aufnahmefächern erfassen.

Jeweils zwei Aufgabefächer oder zwei übereinander liegende Reihen von Aufgabefächern können zu einer Aufnahmesegment zusammengefasst sein. Diese Einheiten können beispielsweise an Förderketten des Pufferförderers gelagert sein. Selbstverständlich könnten auch drei oder mehrere übereinander liegende Reihen von Aufgabefächern zu einer Aufnahmesegment zusammengefasst sein.

Wenn mehrere Aufgabefächer zu einem Aufnahmesegment zusammengefasst sind, kann es vorteilhaft sein, wenn die Aufnahmesegmente einstückig ausgebildet sind. Diese Aufnahmesegmente können beispielsweise aus einem massiven Kunststoffblock hergestellt werden.Weiter kann es vorteilhaft sein, wenn die Kanäle der Aufgabefächer in der Draufsicht eine matrixartige Konfiguration bilden. Die Kanäle für die Aufgabefächer können als Bohrungen ausgebildet sein, die auf einfache Art und Weise mittels Bohr- oder Fräsoperationen hergestellt werden können. Ein Aufnahmesegment könnte aber auch ein Gussteil mit entsprechenden Öffnungen zur Bildung der Kanäle sein.

Der pneumatische Transport der Gegenstände lässt sich weiter verbessern, wenn zum geführten Bereitstellen der Gegenstände im Beladebereich wenigstens eine vorzugsweise ortsfeste Aufgabeanordnung vorgesehen ist, die korrespondierend zu den Aussenabmessungen der Gegenstände als nach oben offene Aufgabewanne oder als Aufgabekanal ausgebildet ist. Zum gruppenweisen Beladen können mehrere in einer Reihe angeordnete bzw. nebeneinander angeordnete Aufgabewannen oder Aufgabekanäle vorgesehen sein.

Der Pufferspeicher kann mit einem Zuführförderer zum Hinführen der Gegenstände zum Beladebereich ausgerüstet sein. Ein solcher Zuführförderer kann beispielsweise als Transportband ausgerüstet sein, welches die Gegenstände horizontal zum Beladebereich heranführt.

Weiter kann es vorteilhaft sein, wenn eine Greifeinrichtung zum Erfassen und Transportieren der Gegenstände vom Zuführförderer zum Beladebereich vorgesehen ist. Eine derartige Greifeinrichtung kann beispielsweise durch eine so genannte "Pick and Place"-Einheit gebildet sein. Derartige Pick and Place-Einheiten sind dem Fachmann bekannt.

Im Entladebereich kann ein Auslaufförderer vorgesehen sein, der derart in Wirkverbindung mit dem pneumatischen Fördermittel steht, dass Gegenstände aus den Aufnahmen des Pufferförderers berührungslos zum Auslaufförderer überführbar sind. Der Auslaufförderer kann über zwei Umlenkorgane endlos geführte Zugfördermittel enthalten. Diese Zugfördermittel des Auslaufförderers können ihrerseits ebenfalls mit darauf angeordneten Aufnahmen zum Aufnehmen der Gegenstände ausgerüstet sein. Diese Aufnahmen können korrespondierend zu den Aussenabmessungen der Gegenstände als Wannen ausgebildet sein. Der Auslaufförderer kann vorzugsweise zwei Umlenkorgane aufweisen, die in etwa auf einer horizontalen Ebene liegen, wodurch die Gegenstände horizontal aus dem Pufferspeicher herausführbar sind.

Entladeseitig kann die pneumatische Förderung weiter verbessert werden, wenn wenigstens ein ortsfester Zwischenkanal vorgesehen ist, durch den die Gegenstände beim Entladen mittels pneumatischer Förderung durchführbar sind, wobei der Zwischenkanal zwischen den zu entladenden Aufnahmen und dem Auslaufförderer angeordnet ist.

In verfahrensmässiger Hinsicht zeichnet sich das Verfahren zum Fördern und Zwischenspeichern von Gegenständen dadurch aus, dass die Gegenstände beim Beladen und/oder Entladen des Förderers berührungslos durch pneumatische Förderung beladeseitig in die Aufnahmen eingebracht und/oder entladeseitig aus den Aufnahmen entnommen werden. Dieses Verfahren wird bevorzugt unter Verwendung des vorgängig beschriebenen Pufferspeichers mit dem genannten Pufferförderer durchgeführt.

Weitere Vorteile und Einzelmerkmale der Erfindung ergeben sich aus der nachfolgenden Beschreibung von Ausführungsbeispielen und aus den Zeichnungen. Es zeigen:
- Figur 1:: eine schematische Darstellung einer erfindungsgemässen Anordnung,
- Figur 2:: den unteren Teil der Anordnung gemäss Figur 1 in einer alternativen Ausführungsform,
- Figur 3:: eine Seitenansicht eines Pufferspeichers,
- Figur 4:: eine Schnittdarstellung des Pufferspeichers gemäss Figur 3 (Schnittlinie A-A gemäss Figur 3),
- Figur 5:: eine Detailansicht eines Beladebereichs mit dem Pufferförderer gemäss Figur 4 (Schnitt B-B gemäss Figur 4),
- Figur 6:: eine Detailansicht des Pufferspeichers mit einem Entladebereich (Schnitt C-C gemäss Figur 4),
- Figur 7:: eine Darstellung von Aufnahmen des Pufferförderers im Querschnitt (Schnitt D-D gemäss Figur 4),
- Figur 7a:: eine alternative Ausgestaltung von Aufnahmen, und
- Figur 8:: eine perspektivische Darstellung eines im erfindungsgemässen Pufferspeicher zu fördernden Gegenstands.

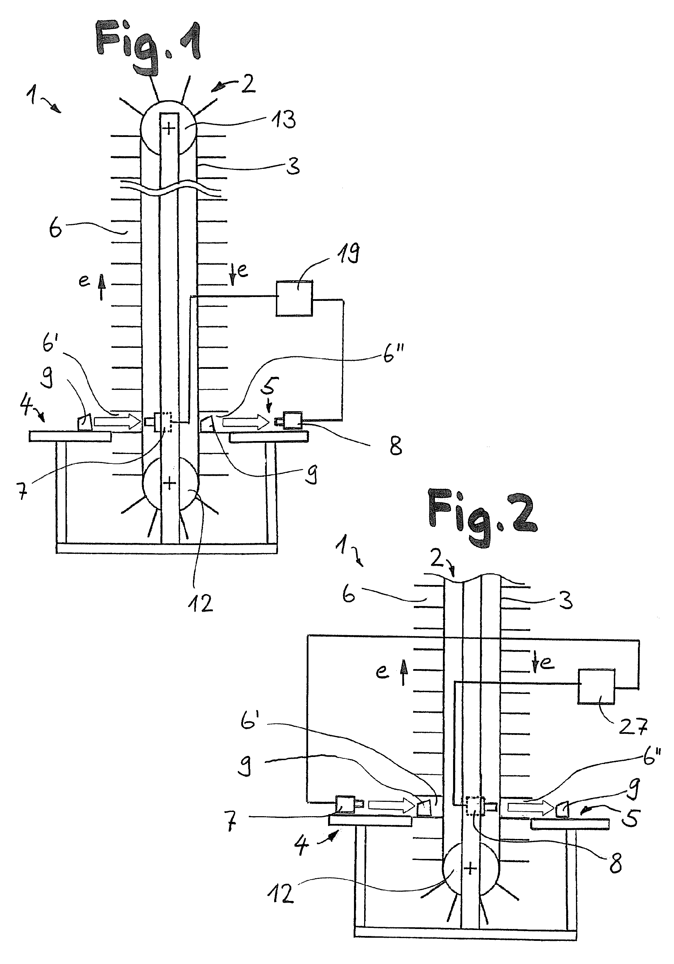

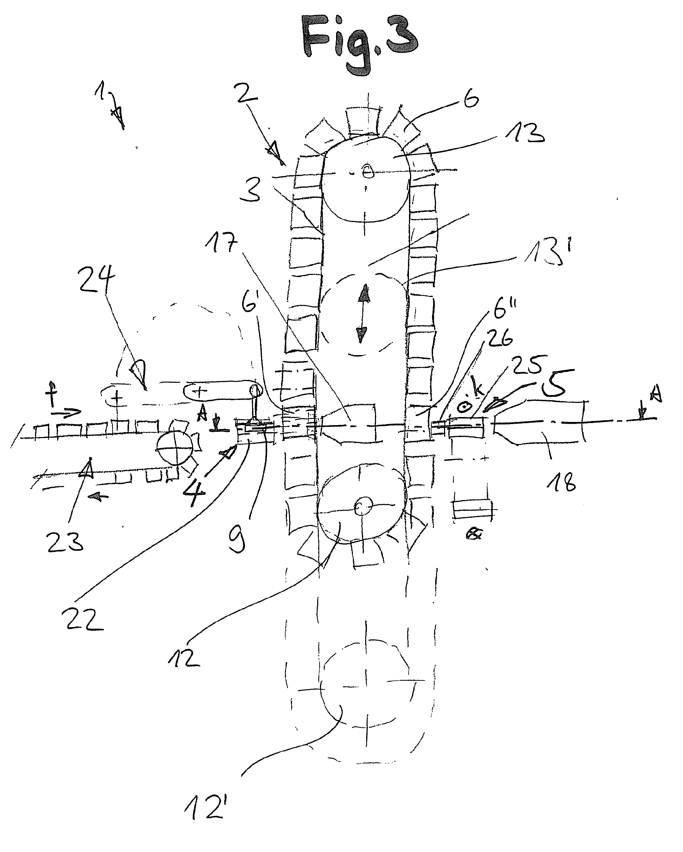

In Figur 1 ist eine mit 1 bezeichnete Anordnung zum Fördern von Gegenständen 9 dargestellt. Die Anordnung besteht in diesem Ausführungsbeispiel im Wesentlichen aus einem Förderer 2. Dieser Förderer 2 weist ein oberes und ein unteres Umlenkorgan 12 und 13 auf, über das jeweils ein endlos geführtes Zugfördermittel 3, beispielsweise Förderketten oder Förderbänder, geführt ist. Am Zugfördermittel 3 sind ersichtlicherweise Aufnahmen 6 zum zeitweiligen Aufnehmen der Gegenstände 9 angeordnet. In der stark schematisierten Figur 1 ist der Förderer 2 in der Anordnung 1 ortsfest angeordnet. Selbstverständlich könnte sich für eine Puffer-Funktion der Förderer in der Anordnung auf und ab bewegen (vgl. z.B. nachfolgende Fig. 3). Derartige Anordnungen sind dem Fachmann unter dem Begriff Pufferspeicher bekannt.

Zum Beladen und Entladen des Förderers 2 mit den Gegenständen 9 sind pneumatische Fördermittel 7 und 8 vorgesehen, mit denen die Gegenstände berührungslos überführbar sind. Die Saugorgane 7 und 8 der pneumatischen Fördermittel sind beladeseitig ersichtlicherweise innen neben den zu beladenden Aufnahmen 6' und entladeseitig aussen neben den zu entladenden Aufnahmen 6" angeordnet. Die Überführung erfolgt jeweils mittels eines Saugluftstroms, der in Figur 1 je mit Blockpfeilen angedeutet ist. Der Saugluftstrom kann jeweils durch Saugorgane erzeugt werden, die mit Vakuumquellen verbunden sind. Wie Figur 1 zeigt, können beide Übergabeeinrichtungen von einer einzigen Vakuumquelle 19 gespeist sein. Die Vakuumquelle 19 kann beispielsweise durch eine oder mehrere Vakuumkolbenpumpen gebildet sein. Selbstverständlich ist es aber auch denkbar, dass jede Übergabeeinrichtung, d. h. das Saugorgan 7 einerseits und das Saugorgan 8 anderseits, von je einer Vakuumquelle gespeist sein könnten.

Die durch die Saugorgane aufbringbare Saugluft kann kontinuierlich oder diskontinuierlich aufrechterhalten werden. Der Saugdruck kann dabei variabel oder konstant eingestellt oder einstellbar sein. Bei einem diskontinuierlichen Betrieb können die Saugorgane synchron mit der Fördergeschwindigkeit des Förderers 2 getaktet sein, so dass beim Passieren der Aufnahme des Beladebereichs und/oder des Entladebereichs jeweils ein Ansaugvorgang ausgelöst wird. Mit (nicht gezeigten) Sensoren kann weiterhin die Anwesenheit von Gegenständen im Beladebereich überwacht werden, die mit einer (nicht gezeigten) Steuereinheit mit dem Saugorgan gekoppelt sind.

Mit Pfeilen e ist die Hauptförderrichtung des Förderers 2 gekennzeichnet, die transversal in vertikaler Richtung verläuft. Beladeseitig bewegen sich die Aufnahmen von unten in Pfeilrichtung e nach oben, wobei sie beim Passieren des Beladebereichs 4 mit 6' gekennzeichnet sind. Die Aufnahmen umlaufen anschliessend das Umlenkorgan 13 und werden dann von oben in e-Richtung nach unten bewegt. Die den Entladebereich 5 passierenden Aufnahmen sind mit 6" bezeichnet. Die Fördergeschwindigkeit des Förderers 2 hängt vor allem vom Takt ankommender Gegenstände (Beladefrequenz: Anzahl Gegenstände pro Zeiteinheit) und von der gewünschten Entladefrequenz ab. Die Förderbewegung des Förderers 2 kann kontinuierlich oder diskontinuierlich erfolgen. Zum Antreiben der Zugfördermittel 3 ist eines der beiden oder beide Umlenkorgane motorisch antreibbar. Die Steuerung des Förderers 2 erfolgt mit (nicht gezeigten) Steuermitteln.

Der Beladebereich 4 und der Entladebereich 5 sind jeweils vereinfacht als ortsfeste Plattformen dargestellt. Grundsätzlich könnten die Beladebereiche 4 und die Entladebereiche 5 aber auch verfahrbar ausgebildet oder schwimmend gelagert sein. Weiter spielt es grundsätzlich keine Rolle, wie die Gegenstände 9 an den Beladebereich 4 herangeführt oder vom Entladebereich 5 weggeführt werden (vgl. aber Figuren 3 bis 7).

Wie aus Figur 2 hervorgeht, können die pneumatischen Fördermittel der Übergabeeinrichtungen auch als Druckluft-Förderanlage ausgebildet sein. In diesem Ausführungsbeispiel enthalten die pneumatischen Fördermittel daher über Blasanordnungen 7 und 8, die jeweils einen mit einem Blockpfeil angedeuteten Druckluftstrom auf den zu fördernden Gegenstand 9 ausüben. Die Blasanordnungen 7 und 8 sind mit einer Druckluftquelle 27 verbunden. Selbstverständlich wäre es aber auch denkbar, die unterschiedlichen pneumatischen Fördermittel gemäss den Figuren 1 und 2 miteinander zu kombinieren. So könnten beispielsweise die Gegenstände beladeseitig in die Aufnahmen angesaugt und entladeseitig von den Aufnahmen weggeblasen werden. Diese Überführung könnte selbstverständlich auch umgekehrt erfolgen (d.h. beladeseitig: wegblasen, entladeseitig: ansaugen).

In Figur 3 ist ein Pufferspeicher 1 gezeigt, der einen vertikal verlaufenden Pufferförderer 2, einen horizontal verlaufenden Zuführförderer 23 und einen ebenfalls horizontal verlaufenden Auslaufförderer 25 zum Wegführen von Gegenständen aus dem Pufferspeicher aufweist. Der Pufferförderer 2 ist gegenüber der Belade- und Entladestation 4, 5 vertikal verschiebbar gelagert, wodurch die momentane Pufferkapazität des Pufferspeichers verändert werden kann. Ein nach unten verschobener Pufferförderer ist mit strichlierten Linien angedeutet, wobei 12' und 13' nach unten verschobene Umlenkorgane zeigen. Die Verschieberichtung ist mit einem doppelspitzigen Pfeil angedeutet. Das Grundprinzip eines derartigen Pufferspeichers ist beispielsweise aus der DE 38 13 080 A1 bekannt. Eine vom Prinzip her vergleichbare Förderkette ist weiterhin auch in der WO 97/06061 beschrieben worden.

Mittels des Zuführförderers 23, beispielsweise einem Endlosförderer mit einem Transportband, werden Gegenstände in f-Richtung zum Pufferförderer 2 hingeführt. Die Gegenstände werden mittels einer Pick-and-Place-Einrichtung 24 erfasst und im Beladebereich 4 abgesetzt und dann vom Greifer der Einrichtung 24 freigegeben. Sobald eine leere Aufnahme 6' den Beladebereich 4 passiert, wird mittels des Saugorgans 17 ein Gegenstand 9 in die Aufnahme 6' überführt. Zum Entladen des Pufferförderers 2 ist entladeseitig ein Saugorgan 18 vorgesehen, mit dessen Hilfe Gegenstände unter Einwirkung eines Saugluftstroms in den Entladebereich 5 übergeführt werden. Der Entladebereich 5 enthält einen Endlosförderer, mit dem die Gegenstände in k-Richtung etwa horizontal aus dem Pufferspeicher weggeführt werden. Die Förderer 23 und 25 des Pufferspeichers 1 gemäss Ausführungsbeispiel von Figur 3 sind in etwa in einem rechten Winkel zueinander angeordnet (f und k schliessen in einer Draufsicht also einen rechten Winkel ein).

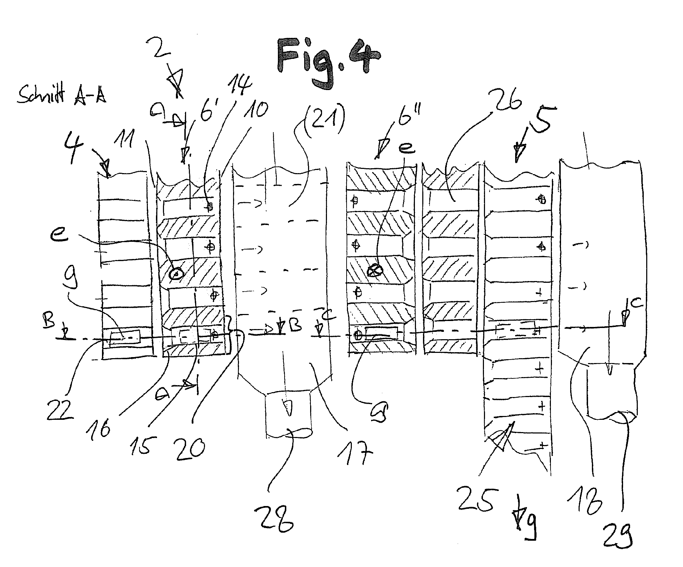

Zwischen dem Auslaufförderer 25 und den zu entladenden Aufnahmen 6" ist ein Zwischenkanal 26 angeordnet, durch welchen die Gegenstände beim Entladen durchführbar sind. Details zur konstruktiven Ausgestaltung des Pufferspeichers sind in den nachfolgenden Figuren 4 bis 7 gezeigt.

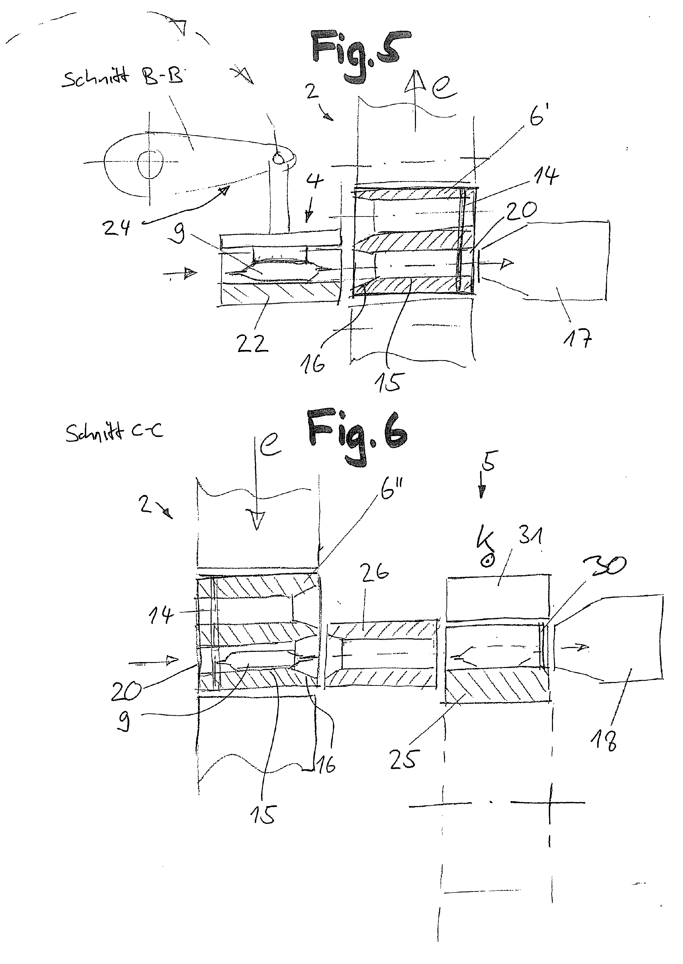

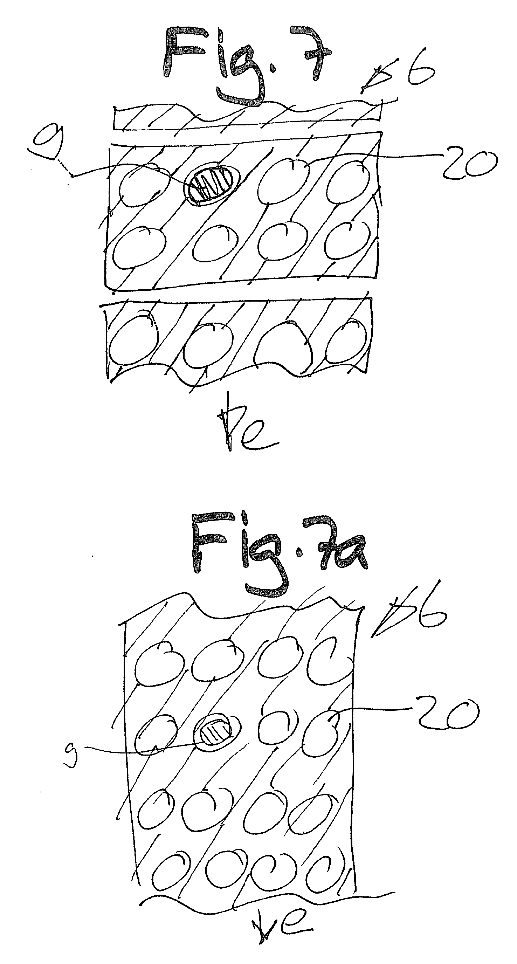

Aus der Schnittdarstellung gemäss Figur 4 geht hervor, dass die Aufnahmen für die Gegenstände 9 als kanalartige Aufnahmefächer ausgebildet sind. Derartige Aufnahmen gewährleisten ein Aufrechterhalten einer Luftströmung für die pneumatische Förderung. Der Energiebedarf für die pneumatische Förderung kann auf diese Weise gesenkt werden, wodurch der Wirkungsgrad der Übergabeeinrichtungen erheblich verbessert werden kann. Die Aufnahmefächer 20 bzw. deren Kanäle sind sowohl auf der Aussenseite 11 als auch auf der Innenseite 10 offen ausgebildet. Auf ihrer Aussenseite 11 weisen die Aufnahmefächer jeweils einen sich nach innen verjüngenden, konischen Einführabschnitt 16 auf, an den ein Aufnahmeabschnitt 15 zur eigentlichen Aufnahme des Gegenstands 9 anschliesst. Der Aufnahmeabschnitt 15 ist dabei im Querschnitt an die aufzunehmenden Gegenstände angepasst, wobei Figur 7 beispielhaft im Längsschnitt rechteckige Gegenstände zeigt. Auf ihrer Innenseite 10 sind in den Aufnahmefächern 20 Bolzen 14 zum Stoppen und Vorgeben einer Aufnahmeposition der Gegenstände angeordnet. Die Bolzen verbinden dabei zwei einander gegenüberliegende Kanalinnenwände der Aufnahmefächer 20 (siehe auch Fig. 5 und Fig. 6).

Das beladeseitige Saugorgan 17 ist kastenförmig ausgebildet und weist Saugöffnungen auf, die auf die beladeseitigen Aufnahmen 6' ausgerichtet sind. Saugluftströme sind mit Pfeilen angedeutet. An diesem Kasten ist ein Anschlussstutzen 28 seitlich angebracht, über welchen das Saugorgan 17 mit einer Vakuumquelle verbindbar oder verbunden ist. In Figur 4 ist durch quer verlaufende strichlierte Linien angedeutet, dass das Saugorgan in einer alternativen Ausführungsform in einzelne, zu den Aufnahmefächern 20 korrespondierende Saugkammern aufgeteilt sein könnte. Das beladeseitige Saugorgan 18 ist im Wesentlichen gleichartig ausgebildet. Es verfügt über einen Anschlussstutzen 29, der mit einer gemeinsamen oder weiteren (nicht gezeigten) Vakuumquelle verbindbar oder verbunden ist.

Für eine gruppenweise Überführung der Gegenstände sind bezogen auf die Förderrichtung ersichtlicherweise mehrere nebeneinander liegende Aufnahmefächer 20 zur Aufnahme jeweils eines Gegenstands 9 vorgesehen. Aus Figur 4 und insbesondere Figur 5 ist erkennbar, dass der Beladebereich 4 nach oben offene, nebeneinander angeordnete Aufnahmewannen 22 enthält, die eine Reihe bilden. Diese Aufnahmewannen sind ersichtlicherweise in etwa an die Aussenabmessungen der Gegenstände 9 angepasst und gewährleisten auf diese Weise eine günstige Führung der Gegenstände beim Überführvorgang. Selbstverständlich wäre es aber auch denkbar, im Beladebereich 4 Aufgabekanäle für die einzelnen Gegenstände vorzusehen.

Figur 5 zeigt weiterhin, dass bezogen auf die Förderrichtung e jeweils zwei Aufgabefächer 22 zu einer Aufnahmesegment zusammengefasst sind (siehe hierzu auch nachfolgende Fig. 7). Diese Einheiten sind beispielsweise an Förderketten des Pufferförderers gelagert.

Aus Figur 4 und insbesondere aus Figur 6 geht hervor, dass der Zwischenkanal 6 etwa wie die Aufgabefächer 20 über einen konisch ausgebildeten, sich nach innen verjüngenden Einführabschnitt aufweist. Die Innenabmessungen des anschliessenden Durchführungskanals entsprechen in etwa den Innenabmessungen des Aufnahmeabschnitts 15. Die Aufnahmen des Auslaufförderers 25 sind als nach oben offene Aufnahmewannen ausgestaltet, wobei zum Stoppen und Vorgeben einer Aufnahmeposition der Gegenstände 9 im Auslaufförderer Bolzen 30 vorgesehen sind. Selbstverständlich sind auch andere Anschlagelemente oder andere Ausgestaltungen zur Bildung eines Anschlags vorstellbar. Über der Aufnahmewanne oder den Aufnahmewannen des Auslaufförderers 25 ist jeweils eine stillstehende bzw. ortsfeste Deckelplatte angeordnet, wodurch für den Saugvorgang zur Bildung eines Kanals die Aufnahmewanne zeitweilig im Entladebereich verschlossen ist.

Aus der Schnittdarstellung gemäss Figur 7 geht klar hervor, dass jeweils zwei übereinander liegende Reihen von Aufgabefächern 20 zu einem Aufnahmesegment zusammengefasst sind. Die Kanäle der Aufgabefächer 20 weisen somit in der Draufsicht eine matrixartige Konfiguration auf. Diese Aufnahmesegmente sind einstückig ausgebildet und können beispielsweise aus einem massiven Kunststoffblock hergestellt werden. Die Kanäle für die Aufgabefächer 20 können als Bohrungen ausgebildet sein, die auf einfache Art und Weise mittels Bohr- und/oder Fräsoperationen hergestellt werden können. Die Aufnahmesegmente könnten aber auch Giessteile ausgebildet sein.

An sich wäre es sogar auch denkbar, dass die Aufnahmen 6 durch ein endloses bandförmiges Element gebildet sind, in dem in Abständen zueinander angeordnete Reihen von Aufgabefächern 20 angeordnet sind. Eine derartige Ausgestaltung ist in Figur 7a dargestellt.

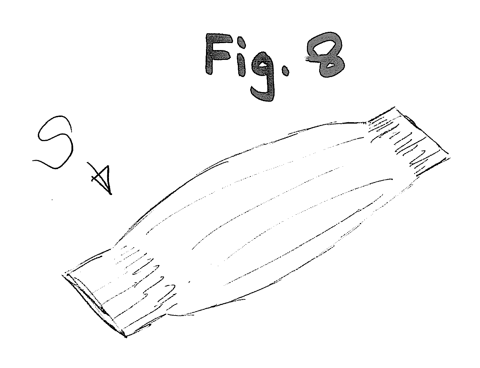

Die Gegenstände 9 können beispielsweise Päckchen sein, die über den Pufferspeicher zu einer Verpackungsmaschine geführt werden, in der sie in eine Schachtel verpackt werden. Eine vergrösserte Darstellung eines solchen Päckchens ist in Figur 8 gezeigt. Ein Päckchen besteht aus einer geschlossenen Hülle aus durchlässigem, folienartigem Material aus z.B. Filterpapier, in dem ein Verpackungsinhalt eingeschlossen ist. Derartige Verpackungen in Form von länglichen Schlaubeuteln sind in konventionellen Pufferspeichern wegen ihrer speziellen Form und ihrer Flexibilität schwierig in der Handhabung.

## Patentansprüche

1. Anordnung zum Förden von Gegenständen (9), insbesondere Pufferspeicher (1) zum Förden und Zwischenspeichern von Gegenständen (9), insbesondere von Verpackungen, mit wenigstens einem über Umlenkorgane (12, 13) endlos geführten Zugfördermittel (3) eines Förderers, insbesondere eines Pufferförderers (2), an dem Aufnahmen (6, 6', 6'') zum zeitweiligen Aufnehmen der Gegenstände (9) angeordnet sind, und mit je einer Übergabeeinrichtung zum Überführen der Gegenstände (9) von einem Beladebereich (4) für den Pufferförderer (2) in die Aufnahmen (6') und zum Überführen der Gegenstände (9) von den Aufnahmen (6") in einen Entladebereich (5) für den Förderer (2), **dadurch gekennzeichnet, dass** wenigstens eine der Übergabeeinrichtungen zum berührungslosen Überführen der Gegenstände (9) pneumatische Fördermittel (7, 8) enthält.

2. Anordnung nach Anspruch 1, **dadurch gekennzeichnet, dass** die Aufnahmen (6, 6', 6") zum Aufrechterhalten einer Luftströmung für die pneumatische Förderung der Gegenstände als kanalartige Aufnahmefächer (20) ausgebildet sind.

3. Anordnung nach Anspruch 1 oder 2, **dadurch gekennzeichnet, dass** die Aufnahmen (6, 6', 6") jeweils auf ihrer Innenseite (10) Anschlagelemente (14) zum Stoppen und Vorgeben einer Aufnahmeposition der Gegenstände (9) aufweisen.

4. Anordnung nach Anspruch 3, **dadurch gekennzeichnet, dass** die Anschlagelemente (14) jeweils Bolzen sind.

5. Anordnung nach einem der Ansprüche 1 bis 4, **dadurch gekennzeichnet, dass** die Aufnahmen (6, 6', 6") als kanalartige Aufnahmefächer (20) ausgebildet sind, die wenigstens im Querschnitt im Bereich eines Aufnahmeabschnitts (15) an die aufzunehmenden Gegenstände (9) angepasst sind.

6. Anordnung nach Anspruch 5, **dadurch gekennzeichnet, dass** die Aufnahmen (6, 6', 6'') auf ihrer Aussenseite (11) jeweils einen sich nach innen verjüngenden Einführabschnitt (16) aufweisen, an den der Aufnahmeabschnitt (15) anschliesst.

7. Anordnung nach einem der Ansprüche 1 bis 6, **dadurch gekennzeichnet, dass** die pneumatischen Fördermittel (7, 8) ein mit einer Vakuumquelle (19) verbundenes oder verbindbares Saugorgan (17, 18) zum Ansaugen der Gegenstände (9) in die und/oder aus den Aufnahmen (6', 6") aufweisen.

8. Anordnung nach Anspruch 7, **dadurch gekennzeichnet, dass** das Saugorgan (17, 18) ortsfest in oder an der Anordnung, insbesondere im oder am Pufferspeicher (1) angeordnet ist.

9. Anordnung nach Anspruch 8, **dadurch gekennzeichnet, dass** beladeseitig ein Saugorgan (17) innen neben den zu beladenden Aufnahmen (6') und/oder entladeseitig ein Saugorgan (18) aussen neben den zu entladenden Aufnahmen (6") angeordnet ist.

10. Anordnung nach einem der Ansprüche 7 bis 9, **dadurch gekennzeichnet, dass** das Saugorgan (17, 18) wenigstens eine Saugkammer (21) aufweist, die beladeseitig und/oder entladeseitig jeweils auf die zu beladenden bzw. zu entladenden Aufnahme oder Aufnahmen (6', 6") in einer Belade- bzw. Entladeposition ausgerichtet ist.

11. Anordnung nach einem der Ansprüche 7 bis 10, **dadurch** dass die Aufnahmen (6, 6', 6'') zum gruppenweisen Beladen und /oder Entladen bezogen auf die Förderrichtung mehrere nebeneinander liegende Aufnahmefächer (20) zur Aufnahme jeweils eines Gegenstands (9) aufweisen.

12. Anordnung nach einem der Ansprüche 7 bis 11, **dadurch gekennzeichnet, dass** zum gruppenweisen Beladen und /oder Entladen mehrere nebeneinander angeordnete Saugkammern (21) vorgesehen sind.

13. Anordnung nach einem der Ansprüche 1 bis 12, **dadurch gekennzeichnet, dass** zum geführten Bereitstellen der Gegenstände im Beladebereich (4) wenigstens eine ortsfeste Aufgabeanordnung vorgesehen ist, die korrespondierend zu den Aussenabmessungen der Gegenstände (9) als nach oben offene Aufgabewanne (22) oder als Aufgabekanal ausgebildet ist.

14. Anordnung nach Anspruch 13, **dadurch gekennzeichnet, dass** zum gruppenweisen Beladen mehrere in Reihen angeordnete Aufgabewannen (22) oder Aufgabekanäle vorgesehen sind.

15. Anordnung nach einem der Ansprüche 1 bis 14, **dadurch gekennzeichnet, dass** die Anordnung (1) mit einem Zuführförderer (23) zum Hinführen der Gegenstände (9) zum Beladebereich (4) ausgerüstet ist.

16. Anordnung nach einem der Ansprüche 1 bis 15, **dadurch gekennzeichnet, dass** weiter eine Greifeinrichtung (24) zum Erfassen und Transportieren der Gegenstände (9) vom Zuführförderer (23) zum Beladebereich (4) vorgesehen ist.

17. Anordnung nach einem der Ansprüche 1 bis 16, **dadurch gekennzeichnet, dass** im Entladebereich (5) ein Auslaufförderer (25) vorgesehen ist, der derart in Wirkverbindung mit dem pneumatischen Fördermittel (8) steht, dass Gegenstände (9) aus den Aufnahmen (6") des Pufferförderers (2) berührungslos zum Auslaufförderer (25) überführbar sind.

18. Anordnung nach Anspruch 17, **dadurch gekennzeichnet, dass** wenigstens ein ortsfester Zwischenkanal (26) vorgesehen ist, durch den die Gegenstände beim Entladen mittels pneumatischer Förderung durchführbar sind, wobei der Zwischenkanal (26) zwischen den zu entladenden Aufnahmen (6") und dem Auslaufförderer (25) angeordnet ist.

19. Verfahren zum Förden und gegebenenfalls Zwischenspeichern von Gegenständen (9) umlaufenden Aufnahmen (6, 6', 6"), die an einem endlos geführten Zugfördermittel eines Förderers angeordnet sind, insbesondere unter Verwendung des Pufferspeichers (1) mit einem Pufferförderer (2) nach einem der Ansprüche 1 bis 18, **dadurch gekennzeichnet, dass** die Gegenstände (9) beim Beladen und/oder Entladen des Förderers (2) berührungslos durch pneumatische Förderung beladeseitig in die Aufnahmen (6') eingebracht und/oder entladeseitig aus den Aufnahmen (6") entnommen werden.
